(19) Europäisches Patentamt
European Patent Office
Office européen des brevets

(11) EP 0 873 937 B1

(12) **EUROPEAN PATENT SPECIFICATION**

(45) Date of publication and mention
of the grant of the patent:
**19.11.2003   Bulletin 2003/47**

(51) Int Cl.7: **B64C 13/28**, F16D 59/02,
F16D 59/00

(21) Application number: **98302977.8**

(22) Date of filing: **17.04.1998**

(54) **Variable torque limiting device**

Antriebsvorrichtung mit variablem Drehmoment-Begrenzungssystem

Dispositif d'entraînement à limitation variable du moment de rotation

(84) Designated Contracting States:
**DE FR GB**

(30) Priority:  **21.04.1997  GB 9707984**

(43) Date of publication of application:
**28.10.1998   Bulletin 1998/44**

(73) Proprietor: **Smiths Wolverhampton Limited
Wolverhampton WV9 5EW (GB)**

(72) Inventors:
• **Harris, Andrew
Perton, Wolverhampton (GB)**
• **Matthews, Timothy
Penkridge, Staffs, ST19 5TD (GB)**

• **Farley, Brian
Hartpury, Gloucestershire (GB)**
• **Venables, Neil
Bewdley, Worcs, DY12 2RH (GB)**

(74) Representative: **Wardle, Callum Tarn
Withers & Rogers
Goldings House,
2 Hays Lane
London SE1 2HW (GB)**

(56) References cited:
EP-A- 0 141 609      FR-A- 2 714 882
US-A- 4 030 578      US-A- 4 751 988
US-A- 4 930 611      US-A- 5 141 084
US-A- 5 199 538

## Description

The present invention relates to a torque limiting device. Such a device may be used in an aircraft flight control actuation system to provide over-load protection. The device incorporates a mechanism by which the torque limit threshold is varied as a function of the number of revolutions undergone by an input shaft to the device.

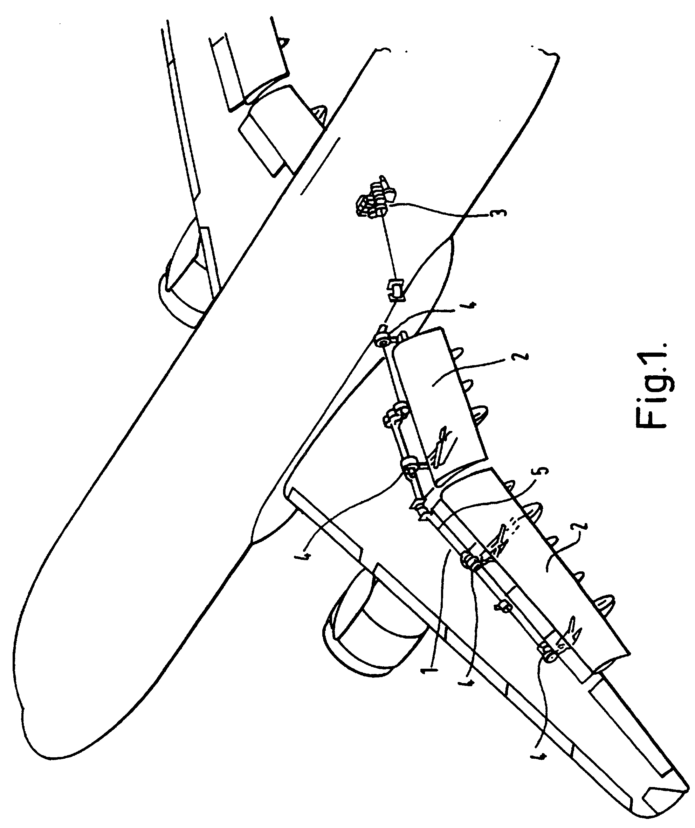

Figure 1 schematically illustrates an actuation system 1 for moving the trailing edge flaps 2 within a single wing of an aircraft. A drive device 3, typically located central to the aircraft, provides motive power to both left and right-hand wings (only the components of one wing are illustrated). The motive power is supplied to a series of actuator drive stations 4 located along the wing. The actuator drive stations 4 move the flaps to discrete positions. Each actuator drive station may comprise a gearbox arrangement to allow power to be taken from a drive transmission line 5, a torque limiting device, for over-load protection and an actuator, which provides torque amplification/speed reduction to move the flap surface. The drive device is of sufficient size to provide motive power to all the actuator drive stations under maximum load and extreme environmental conditions. Consequently, under normal operating conditions each drive station receives a fraction of the power produced by the drive device. However, if a jam occurs at any particular drive station, then the full stall torque from the drive device is reacted by the jammed drive station. In order to prevent damage occurring to the actuator and associated aircraft structure, a torque limiting device is positioned forward of the actuator.

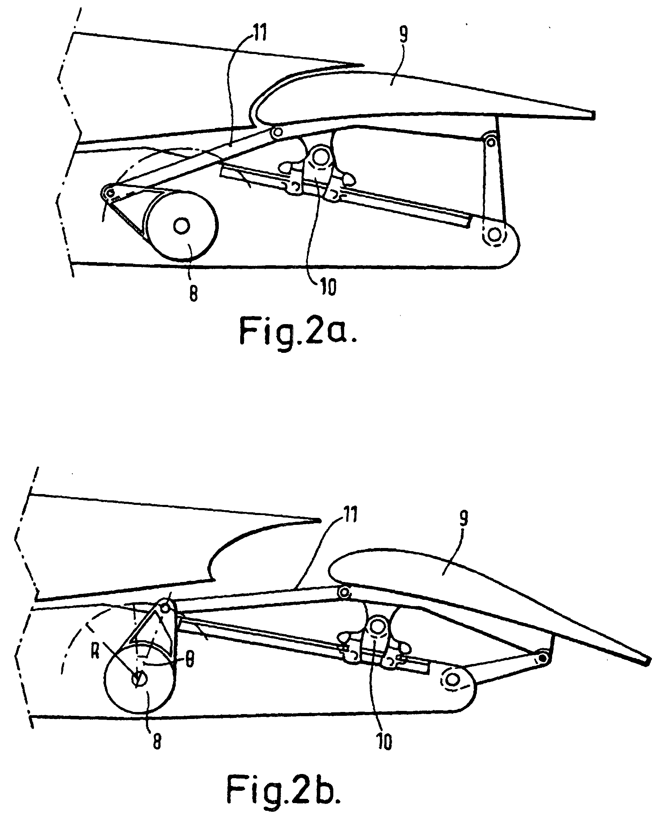

A schematic view of an aircraft flap mechanism and associated drive station is shown in Figures 2a and 2b. An actuator 8 is connected to the flap surface 9 by either a linkage arrangement (not illustrated) or a carriage and track arrangement 10. Prior art torque limiting devices are non-variable and have the torque limit threshold set to a constant value, equal to the maximum operating torque plus a margin (typically 20% to 30 % above the maximum operating torque) to avoid nuisance trips. For the flap mechanism illustrated it can be appreciated that for an arrangement incorporating a non-variable torque limiting device, when the flap 9 is either fully retracted or fully deployed the axial load resulting in strut 11, which connects the actuator 8 to the flap 9, can be comparatively high during a jam condition due to the geometric arrangement. With the flap shown at an intermediate position (as shown in Figure 2b), the relative moment arm R is increased, such that a lower axial load would be experienced by the strut 11.

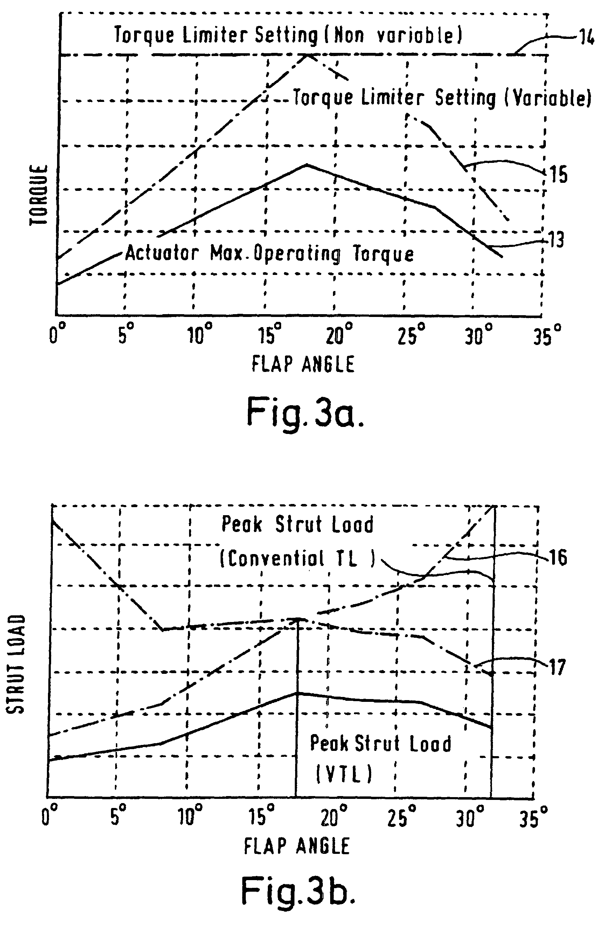

Figures 3a and 3b further illustrate the effect of the actuator's geometric position with respect to the load experienced by the strut 11 and furthermore how the introduction of a variable torque limiting device can reduce the peak strut load. Figure 3a shows a typical relationship between actuator output torque and flap position. The actuator output torque 13 is shown to reach a maximum value between 15° and 20° flap position. For a non-variable torque limiter 14 the maximum lockout value may be 1.8 x maximum operating torque and is maintained at a constant value regardless of flap position. For a variable torque limiter 15 the setting value is taken to be 1.8 x operating torque for a given flap position and therefore is adjusted accordingly.

The load experienced by the strut 11, under a jam condition is given by:

$$Fs = \frac{\text{Torque Limiter Setting}}{\text{Cos } \Theta \text{ x Radius Arm R}}$$

Where:

Fs = load in the strut

$\Theta$ = angle of rotation of axis of radius arm from a position where the axis of the radius arm is perpendicular to the longitudinal axis of the strut

Consequently for an arrangement comprising a non-variable torque limiter, with the flap either retracted or fully extended a relatively high peak strut load, as indicated by line 16 in Figure 3b, could result. An arrangement comprising a variable torque limiter, would have a much lower torque limiter setting for the same corresponding positions, thereby lowering the strut load, as indicated by line 17, which could develop. For such an arrangement, the peak strut load would correspond with the point of maximum operating torque. However, due to the geometric position of the actuator 8 and strut 11, a lower mechanical advantage is attained, thus yielding a lower peak strut load than that obtained with a non-variable torque limiter.

The ability to reduce the peak strut load would allow the associated aircraft structural components to be lighter and/or smaller.

US-5199538 discloses a torque limiter arrangement with a variable setting in which a comparison element is provided at the output shaft of the device in order to monitor the number of revolutions of the output shaft. The comparison element comprises a sleeve coaxially arranged with the output flange of a ball ramp torque limiter and connected thereto via a gearing arrangement which causes the rate of rotation of the sleeve to be slightly different from the rate of rotation of the output flange. This imparts a relative motion between the output flange and the sleeve as the output shaft of the torque limiter rotates. This relative rotary motion is converted to an axial motion via a further ball ramp. The axial motion is used to vary the spring preload that controls the torque trip setting of the torque limiter.

Such an arrangement has certain disadvantages.

Typically, a torque limiting device must be controlled to have little variation in it's threshold setting tolerance. The minimum value at which a non-variable torque limiter must operate, is taken to be 20% to 30% above the maximum operating torque, to avoid the occurrence of nuisance lock-outs. With consideration to manufacturing tolerances, operating temperatures (typically -54°C to +70°C) and accumulated wear over expected life, the maximum value within which the torque limiter is controlled is specified between 70% to 80% above the maximum operating torque. The ability to the limit the maximum threshold value becomes important, since this value must be taken into consideration in assessing the strength requirements of the actuator and aircraft structural components downstream of the drive station. Consequently the effect of increasing the maximum setting value, is to incur additional weight to the aircraft.

As noted above, US-5199538 describes a device in which the comparator element and mechanism for adjusting the spring preload, is located downstream of the ball ramp torque limiter. As a consequence any additional drag or efficiency loss resulting from the mechanism will contribute to greater variation in the setting tolerance of the torque limiter device. Furthermore, in the embodiment detailed in US 5199538, pre-load adjustment is achieved by producing a series of protrusions and depressions along the control path, in effect providing a face cam. This has the disadvantage of a limited stroke to adjust the pre-load within, which combined with the use of a high rate setting spring can be expected to lead to further increases in setting variation due to hysteresis effects.

Since the torque limiter threshold setting is adjusted in accordance with the actuator / flap position, it is necessary to have suitable means to set the device in a known position at which it can be rigged to the aircraft. Otherwise the torque limit threshold may incorrectly correspond to the output torque profile observed by the actuator during flap deployment / retraction. In the embodiment shown in US-5199538 no such means has been provided.

According to a first aspect of the present invention, there is provided a torque limiter comprising an input element (30), an output element (34) and biasing means arranged to exert a biasing force on said output element (34) to urge said output element and input element (30) towards one another, characterised in that said biasing means comprises first and second co-axially aligned biasing elements (110, 112) in threaded engagement with one another and a spring (120) located between the output element (34) and the second biasing element ( 112), the first and second biasing elements being arranged to be driven by said input element (30) in relative rotation with respect to one another such that axial translation occurs between said first and second biasing elements, wherein axial translation of the second biasing element varies the biasing force applied by the spring (120) to the output element (34) such that said biasing force is varied as a function of the amount of rotation of said input element (30).

It is thus possible to provide an arrangement in which the torque trip value is a function of the degree of rotation undergone by the input shaft. Furthermore, the torque absorbed by the adjustment mechanism is removed from upstream of the torque limiting elements and consequently does not contribute towards variation in the torque limiter setting.

Preferably, the torque limiter comprises torque transmitting elements for transmitting torque between the input and output elements.

Preferably, the input element is a flange or disc containing a plurality of recesses for engaging the torque transmitting elements and the output element is a flange or disc also containing a plurality of recesses for engaging the torque transmitting elements. The input and output elements may be coaxially aligned and arranged to undergo limited relative axial motion with respect to each other.

Advantageously, the torque transmitting elements are rolling elements, such as balls or rollers, held between the input and output elements and which engage associated recesses therein.

Preferably, the recesses are profiled such that a torque acting between the input and output elements causes the rolling elements to leave the recesses by rolling upon ramped sides thereof. This in turn causes the input and output elements to move apart against an axial force applied to the elements via the biasing means. The motion of one of the elements away from the other is used to actuate a brake mechanism to inhibit torque transmission through the limiter.

For the spring located between the output element and the second biasing element, various spring designs are useable, including for example, helical springs and disc springs.

Preferably, the brake comprises a stack of discs. Substantially half of the discs are supported by a housing of the torque limiter and are inhibited from movement with respect thereto. The discs may be held in splined or similar engagement with the housing, such that they can undergo limited axial movement. Interposed between neighbouring discs attached to the housing are discs supported by and mounted for rotation with the output element. Motion of the output element away from the input element causes the discs to become compressed between the output element and a support attached to the housing. This compression gives rise to friction between adjacent discs which acts to inhibit rotation of the output element.

Preferably, the bias means is supported between part of the output element and a moveable adjustment plate. The adjustment plate may be engaged with a threaded portion of the input shaft. The adjustment plate may further be geared to the input shaft such that rotation of the input shaft causes relative rotation between the input shaft and the adjustment plate, thereby causing axial movement of the adjustment plate in order to vary the bias force.

Additionally, the biasing means may be arranged such that lost motion of said first biasing element is provided over an initial period of rotation of said input element, whereby said biasing force remains constant over said period.

In a further alternative arrangement, the bias spring may extend between an extension of the output element and a rear face of the input element. The spring may bear against a rolling element held in a cage and engage a profiled ramp in the rear face of the input element. Thus, relative rotation of the cage with respect to the input element causes the rolling element to move with respect to the rear surface of the input element and thereby to adjust the bias force. The cage is driven from the input shaft via a gearing arrangement such that the rate of rotation of the cage and the rotation of the input shaft around their common axis are different.

The present invention will further be described, by way of example, with reference to the accompanying drawings, in which:-

Figure 1 is a diagram showing the arrangement of the drive stations in an aircraft wing;

Figure 2a illustrates an aircraft flap and it's associated actuator in the retracted position;

Figure 2b illustrates an aircraft flap and it's associated actuator in a mid stroke position;

Figure 3a illustrates the relationship between output torque and flap position;

Figure 3b illustrates the relationship between axial force in the strut and flap position;

Figure 4 is a cross-section of a torque limiter constituting an embodiment of the present invention; and

Figure 5 illustrates the relationship between torque limiter setting and flap position for the first embodiment of the present invention.

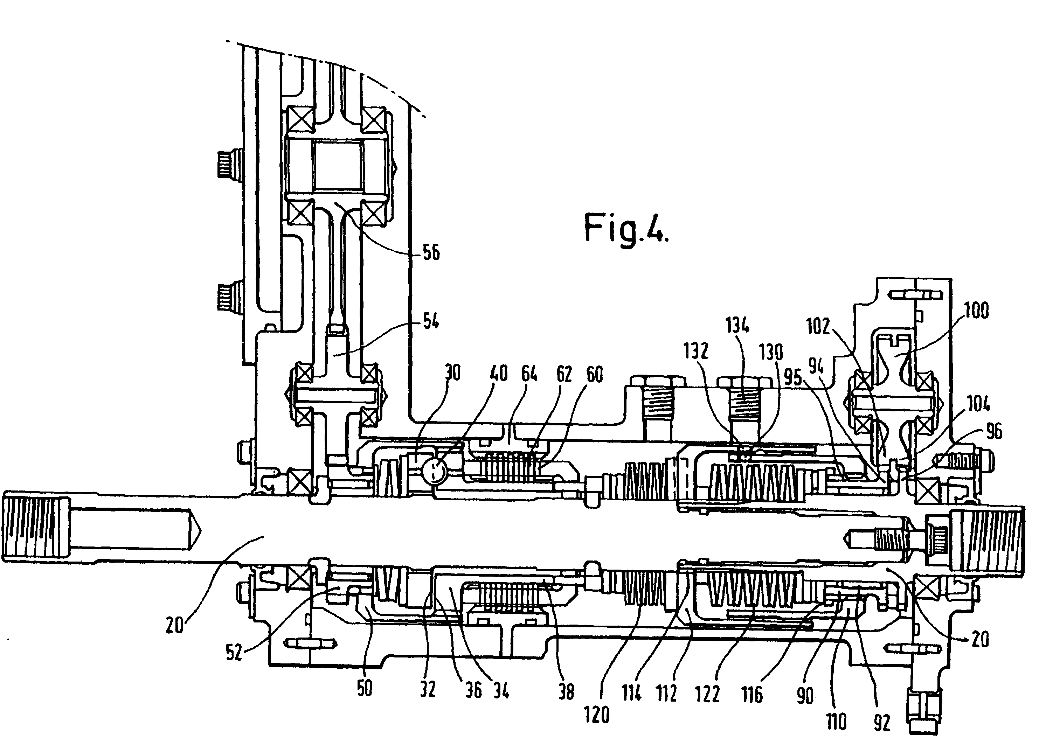

Figure 4 illustrates a cross-section of a variable torque limiter constituting an embodiment of the present invention. An input shaft 20 extends the length of the limiter and has splines provided at either end thereof such that a number of devices can be arranged in series. The input shaft 20 carries an input flange 30 which is adjacent an output flange 34. A first surface 32 of the input flange 30 has a series of profiled pockets formed therein. Similarly a first surface 36 of the output flange 34 has a corresponding set of profiled pockets. The surfaces 32 and 36 face one another, and the pockets cooperate to hold torque transmitting balls 40 between the input and output flanges. The output flange 34 is in splined engagement with a first cup-shaped element 50 which drives a first output gear 52, which in turn drives an idler gear 54 and a second output gear 56. The output flange 34 also comprises a sleeve 38 which is in splined engagement with a set of brake discs 60 which are disposed in an alternating arrangement between a further set of brake discs 62 attached to a housing 64. Movement of the output flange away from the input flange by virtue of the torque transmitted between the flanges 30 and 34 causes the balls 40 to roll out of the profiled pockets and causes the brake discs to bear against one another and the friction there between to hold the output flange against further rotation.

The mechanism for controlling the torque setting comprises a splined sleeve 90 which is supported on a roller bearing arrangement 92 around a portion of the input shaft 20. The sleeve 90 terminates at one end thereof with a geared portion 94 which engages a set of gear teeth 102 carried on a gear element 100. The gear element 100 also carries a further set of gear teeth 104 which engage with a gear 96 carried on the input shaft 20.

A first drive comprises engagement of gear 96 and gear 104. The ratio of the first drive is calculated as 57:57 = 1. A second drive comprises engagement of gear 94 and gear 102. The ratio of the second drive is calculated as 56:58 = 0.9655. It is therefore established that the ratio of the first and second drives differs slightly, such for a given number of revolutions of the input shaft 20, the number of revolutions of the sleeve 90 is slightly lower.

Rotation of the sleeve 90 is transmitted via splines 95 to a generally cylindrical element 110 which in turn is in threaded engagement with a second cup-shaped element 112. The cup-shaped element 112 is also in splined engagement 114 with the input shaft 20. Thus, rotation of the input shaft 20 gives rise to relative rotation between the cylindrical element 110 and the second cup-shaped element 112. This gives rise to axial motion between elements 110 and 112.

Axial movement of element 110 is limited by abutment with a spacer 116. Once this abutment is established, further rotation of the input shaft 20 causes the second cup-shaped element 112 to translate axially, which in turn, varies the force exerted by a first spring pack 120, extending between the second cup-shaped element 112 and the sleeve 38. A second spring pack 122 is provided between a shoulder on the input shaft 20 and the second cup-shaped element 112 and is used to bias movement of the cup-shaped element 112 against the first spring pack 120.

The mode of operation of the torque limiter is as follows:

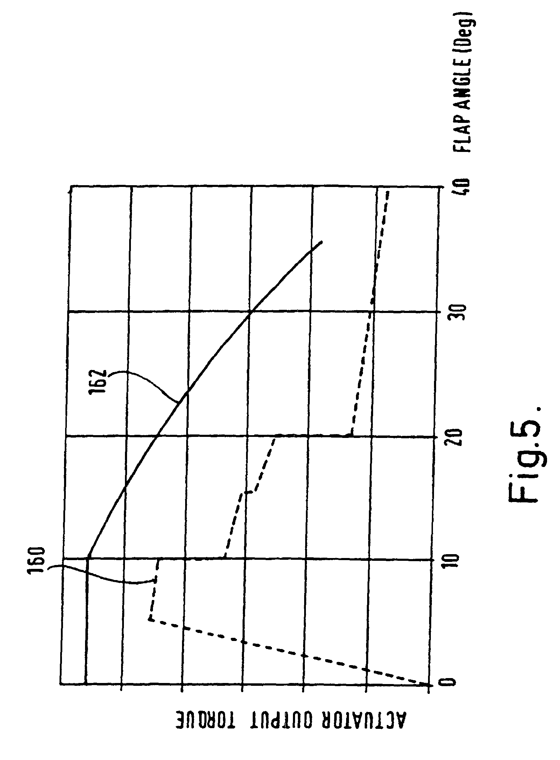

The arrangement shown in Figure 4 provides a variable torque limiter in which the torque limit threshold can initially start at a relatively high value, when the flight control surface is at the stowed position and then progressively reduce during flap deployment. A graph illustrating the reduction in torque limiter setting with flap extension is provided in Figure 5. For the embodiment described, the torque limit setting is also maintained at a constant value between flap 0° and flap 10° positions, such that the torque limiter setting profile 162 mimics that of the actuator output torque profile 160.

The torque limiter arrangement is initially configured as shown in Figure 4, in the "rigged" position. This unique position is detected by alignment of two holes, one hole 130 in the cylindrical element 110 and one hole 132 in the second cup-shaped element 112. Confirmation of the rigged position is achieved by placing a rigging pin (not illustrated) through both holes, which can be accessed via removal of a blanking plug 134. The rigged position corresponds to the flight control surface in it's stowed position. At such a position the torque limiter is at it's highest setting.

To assist in describing the mode of operation of the torque limiter, further references to anticlockwise (ACW) rotation of the input shaft 20 shall relate to extension of the flight control surface and reference to clockwise (CW) rotation of the input shaft 20 shall relate to retraction of the flight control surface.

Rotation of the input shaft in an ACW sense to deploy the flight control surface, causes relative rotation between the cylindrical element 110 and the second cup-shaped element 112 by virtue of the gearing provided by element 100. This motion initially causes the cylindrical element 110 to translate (to the left as viewed in Figure 4) until it abuts with the spacer 116. This motion provides a dead band in which the torque does not vary as a function of rotation (i.e. with reference to Figure 5, 0° flap position to 10° flap position). However, once the cylindrical element 110 contacts the spacer 116, further rotation of the input shaft 20 causes the second cup-shaped element 112 to translate away from the input flange 30 (to the right as shown in Figure 4). This relaxes the first spring pack 120 and thereby reduces the force applied to the output flange 34, thus reducing the torque limit threshold. Hence the torque limit threshold decreases as the flight control surface moves towards it's fully deployed position.

Rotation of the input shaft 20 in a CW direction to retract the deployed flight control surface reverses the above described sequence and causes the second cup-shaped element 112 to translate (to the left) assisted by the bias force provided from the second spring pack 122. This action causes the first spring pack 120 to compress and thus increases the force applied to the output flange 34, thereby increasing the torque limit threshold.

In the event of a jam occurring downstream of the output flange 34, excessive torque applied to the input flange 30, via the input shaft 20, will cause the torque limiter threshold to be exceeded and inhibit further rotation of the device and connecting elements by application of the brakes. Application of the brake is achieved by virtue of the following:

A tangential force resulting from the applied torque is distributed across the balls 40. The balls 40 sit in pockets having sloping sides, and consequently, the balls are forced to escape from the pockets by rolling up the sides, this in turn produces an axial force which counteracts the pre-loading force applied by the first spring pack 120. As the torque applied to the input flange 30 increases, the axial force tending the separate the input flange 30 and the output flange 34 also increases until it exceeds the pre-loading force applied by the first spring pack 120. The output flange 34 moves (to the right) away from the input flange 30, thereby causing the brake discs 60 and 62 to engage one another and inhibit further rotation of the output flange 34, until such time that the excess torque is removed.

It is thus possible to provide a variable torque limiter in which the drive to the torque limit adjustment mechanism is taken from upstream of the torque limiting elements, thereby not compromising tolerance limits between minimum and maximum expected lock-out values experienced with non-variable torque limiters.

## Claims

1. A torque limiter comprising an input element (30), an output element (34) and biasing means arranged to exert a biasing force on said output element (34) to urge said output element and input element (30) towards one another, **characterised in that** said biasing means comprises first and second co-axially aligned biasing elements (110, 112) in threaded engagement with one another and a spring (120) located between the output element (34) and the second biasing element (112), the first and second biasing elements being arranged to be driven by said input element (30) in relative rotation with respect to one another such that axial translation occurs between said first and second biasing elements, wherein axial translation of the second biasing element varies the biasing force applied by the spring (120) to the output element (34) such that said biasing force is varied as a function of the amount of rotation of said input element (30).

2. A torque limiter as claimed in claim 1, further comprising torque transmitting elements (40) for transmitting torque between the input (30) and output (34) elements.

3. A torque limiter as claimed in claim 1 or 2, wherein the input element (30) is a flange or disc containing a plurality of recesses for engaging the torque transmitting elements.

4. A torque limiter as claimed in claim 3, wherein the input (30) and output (34) elements are co-oxially aligned and arranged to undergo limited relative axial motion with respect to each other.

**5.** A torque limiter as claimed in claim 4, wherein the torque transmitting elements are rolling elements held between the input (30) and output (34) elements and which engage the associated recesses therein, and in that the recesses are profiled such that a torque acting between the input (30) and output (34) elements causes the rolling elements to leave the recesses by rolling up the ramped sides thereof.

**6.** A torque limiter as claimed in any preceding claim, wherein a brake is provided for selectively inhibiting rotation of the output element (34), the brake comprising a stack of disks held against rotation and interleaved with a plurality of disks supported by and mounted for rotation with the output element (34) and arranged such that motion of the output element away from the input element causes the disks to become compressed thereby resisting rotation of the output element.

**7.** A torque limiter as claimed in any preceding claim, wherein said second biasing element (112) is engaged with a threaded portion of an input shaft (20).

**8.** A torque limiter as claimed in claim 7, wherein said first biasing element (110) is geared to the input shaft (20) such that rotation of the input shaft causes relative rotation between the input shaft and the first biasing element (110) thereby causing axial movement of the second biasing element (112) in order to vary the bias force.

**9.** A torque limiter as claimed in claim 1, wherein the biasing means extends between an extension of the output element (34) and a rear face of the input element (30) and bears against a rolling element held in a cage and engage a profiled ram in a rear face of the input element.

**10.** A torque limiter according to any preceding claim, wherein said biasing means is arranged such that lost motion of said first biasing element (110) is provided over an initial period of rotation of said input element (30), whereby said biasing force remains constant over said period.

**Patentansprüche**

**1.** Drehmomentbegrenzungsvorrichtung, welche ein Eingangselement (30), ein Ausgangselement (34) und eine Vorbelastungseinrichtung aufweist, welche derart beschaffen und ausgelegt ist, daß sie eine Vorbelastungskraft auf das Ausgangselement (34) aufbringt, um das Ausgangselement und das Eingangselement (30) aufeinander zu drücken, **dadurch gekennzeichnet, daß** die Vorbelastungseinrichtung erste und zweite, koaxial ausgerichtete Vorbelastungselemente (110, 112) in Gewindeeingriff miteinander und eine Feder (120) aufweist, welche zwischen dem Ausgangselement (34) und dem zweiten Vorbelastungselement (112) angeordnet ist, die ersten und die zweiten Vorbelastungselemente derart beschaffen und ausgelegt sind, daß sie durch das Eingangselement (30) zur Ausführung einer relativen Drehbewegung bezüglich einander derart angetrieben sind, daß eine axiale Translationsbewegung zwischen den ersten und den zweiten Vorbelastungselementen auftritt, wobei die axiale Translationsbewegung des zweiten Vorbelastungselements die Vorbelastungskraft verändert, die durch die Feder (120) auf das Ausgangselement (30) aufgebracht wird, und zwar in einer solchen Weise, daß die Vorbelastungskraft sich als eine Funktion der Größe der Drehbewegung des Eingangselements (30) ändert.

**2.** Drehmomentbegrenzungsvorrichtung nach Anspruch 1, welche ferner Drehmomentübertragungselemente (40) zum Übertragen eines Drehmoments zwischen dem Eingangselement (30) und dem Ausgangselement (34) aufweist.

**3.** Drehmomentbegrenzungsvorrichtung nach Anspruch 1 oder 2, bei der das Eingangselement (30) ein Flansch oder eine Scheibe ist, welche eine Mehrzahl von Ausnehmungen zum Zusammenarbeiten mit den Drehmomentübertragungselementen enthält.

**4.** Drehmomentbegrenzungsvorrichtung nach Anspruch 3, bei der das Eingangselement (30) und das Ausgangselement (34) koaxial ausgerichtet und derart ausgelegt sind, daß sie eine begrenzte relative axiale Bewegung bezüglich einander ausführen.

**5.** Drehmomentbegrenzungsvorrichtung nach Anspruch 4, bei der die drehmomentübertragenden Elemente Wälzelemente sind, welche zwischen dem Eingangselement (30) und dem Ausgangselement (34) angeordnet sind, und die mit den zugeordneten Ausnehmungen zusammenarbeiten, und daß die Ausnehmungen derart profiliert sind, daß ein zwischen dem Eingangselement (30) und dem Ausgangselement (34) wirkendes Drehmoment bewirkt, daß die Wälzelemente die Ausnehmungen dadurch verlassen, daß sie sich auf den geneigten Seiten abwälzen.

**6.** Drehmomentbegrenzungsvorrichtung nach einem der vorangehenden Ansprüche, bei der eine Bremse zum selektiven Unterdrücken der Drehbewegung des Ausgangselements (34) vorgesehen ist, die Bremse einen Stapel von Scheiben aufweist, die drehfest gehalten sind und zwischen denen eine Mehrzahl von Scheiben angeordnet ist, welche an dem Ausgangselement (34) gelagert und mit diesem eine Drehbewegung ausführen können, so daß bei einer Bewegung des Ausgangselements von dem Eingangselement weg bewirkt wird, daß die Scheiben zusammengedrückt werden, um hierdurch der Drehbewegung des Ausgangselements einen Widerstand entgegenzusetzen.

7. Drehmomentbegrenzungsvorrichtung nach einem der vorangehenden Ansprüche, bei dem das zweite Vorbelastungselement (112) mit einem Gewindeabschnitt einer Eingangswelle (20) zusammenarbeitet.

8. Drehmomentbegrenzungsvorrichtung nach Anspruch 7, bei der das erste Vorbelastungselement (110) ineinander greifend mit der Eingangswelle (20) derart vorgesehen ist, daß eine Drehbewegung der Eingangswelle eine relative Drehbewegung zwischen der Eingangswelle und dem ersten Vorbelastungselement (110) bewirkt, wodurch eine axiale Bewegung des zweiten Vorbelastungselements (112) zur Veränderung der Vorbelastungskraft erzeugt wird.

9. Drehmomentbegrenzungsvorrichtung nach Anspruch 1, bei der die Vorbelastungseinrichtung zwischen einer Verlängerung des Ausgangselements (34) und einer Rückseite des Eingangselements (30) verläuft und gegen ein Wälzelement anliegt, welches in einem Käfig gehalten ist, und mit einer profilierten, geneigten Fläche an der Rückseite des Eingangselements zusammenarbeitet.

10. Drehmomentbegrenzungsvorrichtung nach einem der vorangehenden Ansprüche, bei der die Vorbelastungseinrichtung derart ausgelegt ist, daß eine Totgangbewegung des ersten Vorbelastungselements (110) während einer Anfangsphase der Drehbewegung des Eingangselements (30) vorhanden ist, wodurch die Vorbelastungskraft während dieses Zeitraums konstant bleibt.

**Revendications**

1. Limiteur de couple comprenant un élément d'entrée (30), un élément de sortie (34) et un dispositif de rappel destiné à exercer une force de rappel sur l'élément de sortie (34) afin qu'il rappelle l'élément de sortie et l'élément d'entrée (30) l'un vers l'autre, **caractérisé en ce que** le dispositif de rappel comporte un premier et un second élément de rappel (110, 112) alignés coaxialement et coopérant par vissage l'un avec l'autre, et un ressort (120) placé entre l'élément de sortie (34) et le second élément de rappel (112), les premier et second éléments de rappel étant disposés afin qu'ils soient entraînés par l'élément d'entrée (30) par rotation relative l'un par rapport à l'autre afin qu'un déplacement axial en translation se produise entre les premier et second éléments de rappel, le déplacement en translation axiale du second élément de rappel faisant varier la force de rappel appliquée par le ressort (120) à l'élément de sortie (34) de manière que la force de rappel varie en fonction de l'amplitude de rotation de l'élément d'entrée (30).

2. Limiteur de couple selon la revendication 1, comprenant en outre des éléments (40) de transmission de couple entre les éléments d'entrée (30) et de sortie (34).

3. Limiteur de couple selon la revendication 1 ou 2, dans lequel l'élément d'entrée (30) est un flasque ou un disque ayant plusieurs cavités de coopération avec les éléments de transmission de couple.

4. Limiteur de couple selon la revendication 3, dans lequel les éléments d'entrée (30) et de sortie (34) sont alignés coaxialement et disposés afin qu'ils présentent un mouvement axial relatif limité l'un par rapport à l'autre.

5. Limiteur de couple selon la revendication 4, dans lequel les éléments de transmission de couple sont des éléments roulants maintenus entre les éléments d'entrée (30) et de sortie (34) qui coopèrent avec les cavités associées, et en ce que les cavités ont un profil tel que le couple agissant entre les éléments d'entrée (30) et de sortie (34) provoque la sortie des éléments roulants des cavités par roulement le long des côtés inclinés de celles-ci.

6. Limiteur de couple selon l'une quelconque des revendications précédentes, dans lequel un frein est destiné à empêcher sélectivement la rotation de l'élément de sortie (34), le frein comprenant un empilement de disques maintenus afin qu'ils ne puissent pas tourner, imbriqués avec plusieurs disques supportés par l'élément de sortie (34), montés afin qu'ils tournent avec celui-ci, et disposés afin qu'un mouvement de l'élément de sortie à distance de l'élément d'entrée provoque la mise en compression des disques qui résistent ainsi à la rotation de l'élément de sortie.

7. Limiteur de couple selon l'une quelconque des revendications précédentes, dans lequel le second élément de rappel (112) est en coopération avec une partie filetée d'un arbre d'entrée (20).

8. Limiteur de couple selon la revendication 7, dans lequel le premier élément de rappel (110) est raccordé par un engrenage à l'arbre d'entrée (20) de manière que la rotation de l'arbre d'entrée provoque une rotation relative entre l'arbre d'entrée et le premier élément de rappel (110), et provoque ainsi un déplacement axial du second élément de rappel (112) afin que la force de rappel varie.

9.  Limiteur de couple selon la revendication 1, dans lequel le dispositif de rappel s'étend entre un prolongement de l'élément de sortie (34) et une face arrière de l'élément d'entrée (30), il est en appui contre un élément roulant maintenu dans une cage et il coopère avec un piston profilé à une face arrière de l'élément d'entrée.

10. Limiteur de couple selon l'une quelconque des revendications précédentes, dans lequel le dispositif de rappel est disposé afin qu'un déplacement libre du premier élément de rappel (110) soit créé dans une période initiale de rotation de l'élément d'entrée (30), si bien que la force de rappel reste constante pendant cette période.

Fig.1.

EP 0 873 937 B1

Fig.2a.

Fig.2b.

Fig.3a.

Fig.3b.

Fig.4.

EP 0 873 937 B1

Fig.5.